# EUROPEAN PATENT APPLICATION

(11) **EP 4 779 174 A1**
(43) Date of publication of application: **22.07.2026**
(21) Application number: 26152450.8
(22) Date of filing: 16.01.2026
(51) Int. Cl.: F16H 1/32

(54) **METHOD AND SYSTEM FOR HIGH TORQUE DENSITY ECCENTRIC GEAR ASSEMBLY**

(30) Priority: 17.01.2025 US 202563746659 P
(71) Applicant: Fathom5 Corporation, Austin Texas 78754 (US)
(72) Inventor: NEVES, Robert Scott, Texas, 78754 (US); STAPLES, Zachary Hayden, Texas, 78754 (US); MILLER, Zachary Thomas, Texas, 78754 (US)
(74) Representative: FRKelly

(57) **Abstract**

A gear includes a set of circular arc teeth disposed on a peripheral surface of the gear. The pitch of the set of circular arc teeth defines a first tooth thickness angle *θ* and each tooth is defined by a main tooth curvature, a tip relief curvature, a tip curvature, and a second tooth thickness angle *θ'* = *θ*(1-*x*), where x is a positive value. A gear assembly includes an internal gear having N teeth and an eccentric gear having N-1 teeth. At least one of the internal gear or the eccentric gear includes a set of circular arc teeth disposed on a peripheral surface of the at least one of the internal gear or the eccentric gear include teeth having a first tooth thickness angle *θ* and a second tooth thickness angle *θ'* = *θ*(1-*x*), wherein x is a positive value.

## Description

### CROSS-REFERENCES TO RELATED APPLICATIONS

This application claims the benefit of U.S. Provisional Application No. 63/746,659, filed on January 17, 2025, the disclosure of which is hereby incorporated by reference in its entirety for all purposes.

### STATEMENT AS TO RIGHTS TO INVENTIONS MADE UNDER FEDERALLY SPONSORED RESEARCH OR DEVELOPMENT

This invention was made with government support under Contract No. N6833523C0619 awarded by the Naval Sea Systems Command (NAVSEA), Department of the Navy. The government has certain rights in the invention.

### SUMMARY OF THE INVENTION

Circular tooth designs are defined as a composition of multiple circular arcs, namely the tip circle, main tooth curvature, and tip relief tooth curvature. Relevant design parameters that determine this curvature for prior art circular tooth designs include selecting the desired number of teeth for internal and eccentric gears to achieve a given ratio and torque capability, (e.g., to derive the pitch circle), selecting the pressure angle to achieve the desired radial load characteristics for the teeth, selecting the radii of the main tooth curvatures (e.g., for an internal and an eccentric gear) to create a pin and socket contact and provide shape control, selecting the tip relief curvature and tip relief circle radii (e.g., for an internal and an eccentric gear) to minimize interference between teeth pairs, and selecting the tip circles for internal and eccentric gears to achieve a desired contact ratio between the gear.

According to an embodiment of the present invention, a gear assembly is provided. The gear assembly includes an internal gear having N teeth and an eccentric gear having N-1 teeth. At least one of the internal gear or the eccentric gear comprises a set of circular arc teeth disposed on a peripheral surface of the at least one of the internal gear or the eccentric gear, wherein a pitch of the set of circular arc teeth defines a first tooth thickness angle θ; wherein each tooth is defined by: a main tooth curvature; a tip relief curvature; a tip curvature; and a second tooth thickness angle *θ*'=*θ*(1-*x*), wherein x is a positive value. N can be greater than or equal to 50, for example, between 10 and 100, or, for example, between 25 and 75, or, for example, between 40 and 60. The eccentric gear can be offset from the center of the internal gear by a nominal amount for circular arc teeth defined by a first tooth thickness angle *θ* and is offset from the center of the internal gear by an offset amount greater than the nominal amount for modified circular arc teeth defined by the second tooth thickness angle θ'. The offset amount can prevent out of mesh interference. Both the internal gear and the eccentric gear can have the second tooth thickness angle *θ*'=*θ*(1-*x*), for example, x can be less than or equal to 2.5%. The main tooth curvature and the tip relief curvature can be joined at a first tangent point. The tip curvature can be greater than or equal to zero or equal to zero.

According to another embodiment of the present invention, a gear is provided. The gear includes a set of circular arc teeth disposed on a peripheral surface of the gear. A pitch of the set of circular arc teeth defines a first tooth thickness angle *θ*. Each tooth is defined by a main tooth curvature, a tip relief curvature, a tip curvature, and a second tooth thickness angle *θ*'=*θ*(1-*x*), wherein x is a positive value. The value for *x* can be less than or equal to 2.5%. The main tooth curvature and the tip relief curvature can be joined at a first tangent point. The tip relief curvature and the tip curvature can be joined at a second tangent point. The tip curvature can be zero, less than zero, or greater than zero. The pitch of the set of circular arc teeth can be equal to a circumference of a pitch circle divided by a number of teeth. An arc of the pitch circle can include end points corresponding to tooth thickness angle radii end points. The gear can have between 10 and 100 circular arc teeth, for example, between 25 and 75 circular arc teeth, or, for example, between 40 and 60 circular arc teeth. The first tooth thickness angle can be defined by a midplane of each tooth and a pitch point of the tip relief curvature with respect to a center of the gear.

According to yet another embodiment of the present invention, a method of modifying teeth disposed along a circumference of a gear is provided. The method includes defining a first tooth thickness angle between a midplane of a tooth and a pitch point of the tooth with respect to a center of the gear and modifying the first tooth thickness angle to form a second tooth thickness angle. Modifying the first tooth thickness angle forms a modified tooth profile. A difference between the first tooth thickness angle and the second tooth thickness angle can be a tooth thinning angle less than or equal to 0.25% of the first tooth thickness angle. Modifying the first tooth thickness angle to form the second tooth thickness angle can include rotating the pitch point about the center by a tooth thinning angle. The tooth can be defined by at least a main tooth curvature, a tip relief curvature, and a tip curvature. The tip curvature is greater than or equal to zero or equal to zero. The main tooth curvature and the tip relief curvature can be joined at a first tangent point. The tip relief curvature and the tip curvature can be joined at a second tangent point.

Despite the progress made in the area of eccentric gear assemblies, there is a need in the art for improved methods and systems related to eccentric gear assemblies.

### BRIEF DESCRIPTION OF THE DRAWINGS

FIG. 1A illustrates a circular tooth geometry.
FIG. 1B illustrates a detailed view of the circular tooth geometry as shown in FIG. 1A.
FIG. 1C illustrates radial loads on a circular arc tooth such as the circular arc tooth of FIG. 1A.
FIG. 1D illustrates additional parameters related to arc interaction in circular arc tooth geometry.
FIG. 1E is a schematic diagram illustrating a cycloidal gear.
FIG. 1F is a schematic diagram illustrating pin-on-pin contact in a cycloidal gear.
FIG. 1G is a schematic diagram illustrating a circular arc gear.
FIG. 1H is a schematic diagram illustrating pin-in-socket contact in a circular arc gear.
FIG. 2A illustrates a modified tooth geometry used to provide a modified circular arc tooth according to embodiments of the present disclosure.
FIG. 2B illustrate a detailed view of the modifications shown in FIG. 2A according to embodiments of the present disclosure.
FIG. 2C illustrates measurements of the circular arc tooth.
FIG. 2D illustrates measurements of the modified circular arc tooth.
FIG. 3A illustrates a perspective cross section diagram of a gear assembly according to embodiments of the present disclosure.
FIG. 3B illustrates a gear pair of a gear assembly in a first position according to embodiments of the present disclosure.
FIG. 3C illustrates a gear pair of a gear assembly in a second position according to embodiments of the present disclosure.
FIG. 3D illustrates a gear pair of a gear assembly according to embodiments of the present disclosure.
FIG. 4A illustrates a 50-49 tooth gear pair with a 7° circular arc pressure angle according to an embodiment of the present disclosure.
FIG. 4B illustrates a zoomed in portion of the 50-49 tooth gear pair illustrated in FIG. 4A.
FIG. 4C illustrates a 50-49 tooth gear pair with 25° circular arc pressure angle and 2.5% tooth thinning according to embodiments of the present disclosure.
FIG. 4D illustrates a zoomed in portion of the 50-49 tooth gear pair illustrated in FIG. 4C.

### DETAILED DESCRIPTION OF SPECIFIC EMBODIMENTS

While various embodiments of the present disclosure are discussed in detail below, it should be appreciated that the present disclosure provides many applicable inventive concepts, which can be embodied in a wide variety of specific contexts. The specific embodiments discussed herein are merely illustrative of specific ways to make and use the disclosure and do not limit the scope of the disclosure.

Circular arc tooth geometry does not allow for a 1-tooth difference in a Simplified Parallel Eccentric (SPE) configuration for small numbers of teeth (i.e., less than 100) as it results in interference. One alternative to circular arc gear teeth that can achieve a 1-tooth difference is profile-shifted involute teeth. However, these teeth have a larger effective pressure angle that translates to undesirable increases in radial load of the gear that, in turn, increases bearing loads requiring larger bearings to compensate. Another alternative to achieve a 1-tooth difference in an eccentric gear is to use a cycloidal gearbox (rather than the SPE). However, cycloidal gearboxes are limited to smaller loads for a given volume. Conventional actuators having a high reduction ratio in a single stage use cycloidal discs for gearing. Cycloidal discs have high contact stresses, high rates of lost motion, and limited load capacity.

Embodiments of the present disclosure modify the circular arc tooth geometry to reduce interference with minimal increase in radial load. This enables a 1-tooth difference SPE to be achieved with smaller bearings (and therefore less overall volume) than any prior art tooth geometry for a given load. Embodiments of the present disclosure provide a lowering actuator utilizing a parallel eccentric gear assembly design with a one-tooth difference gear pair.

According to embodiments of the present invention, a gear includes a set of modified circular arc teeth disposed on a peripheral surface of the gear (e.g., along the circumference of the gear). Each tooth may be defined by a pitch circle that provides the parameters for spacing of the teeth along the circumference of the gear. For example, a tooth thickness may be provided by the difference between two points along the pitch circle (e.g., a width between an original pitch point and an opposite pitch point mirrored across a midline of the tooth). The circumference of the pitch circle may define the number of teeth for the gear such that no partial teeth are formed along the circumference. Each tooth may be defined by at least a main tooth curvature circle and a tip relief circle. A pitch of the set of teeth may define a first tooth thickness angle *θ*. Embodiments of the present disclosure provide methods and systems for thinning the tooth such that a second tooth thickness angle *θ*' equals *θ*' = *θ*(1 - x) where *x* is a positive value greater than zero. In various embodiments, x is greater than or equal to or less than 2.5%. In other embodiments, the difference between the first tooth thickness angle *θ* and the second tooth thickness angle *θ*' is equal to (*θ*' = *θ* - δ) where δ is the difference between the values of the two angles and is positive value greater than zero.

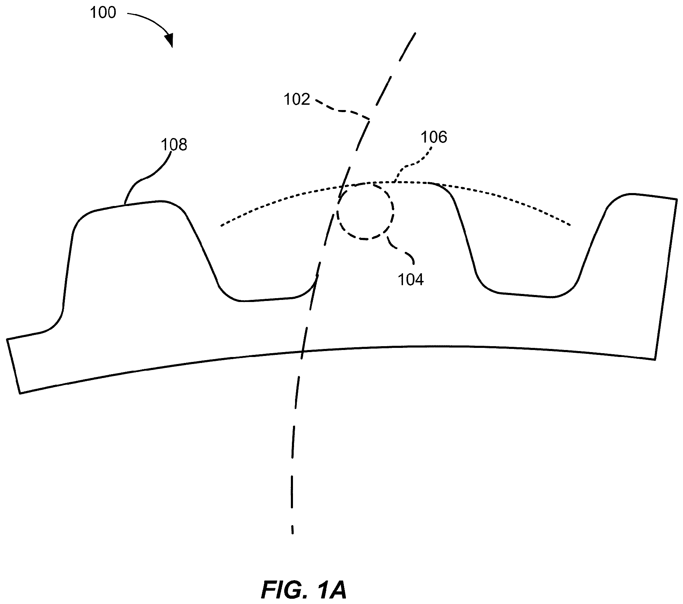

FIG. 1A illustrates a circular tooth geometry. A circular arc tooth 100 is formed by combinations of circular arcs. As shown in FIG. 1A, the circular arc tooth 100 includes a main tooth curvature 102 that extends along at least one side of the circular arc tooth 100. The circular arc tooth 100 further includes a tip relief tooth curvature 104 that forms a curved tip of the circular arc tooth 100. The circular arc tooth 100 further includes a tip tooth curvature 106 that can extend across the tip 108 of the circular arc tooth 100. The tip curvature can be the OD/ID of the gear part, but it can also be some other radius.

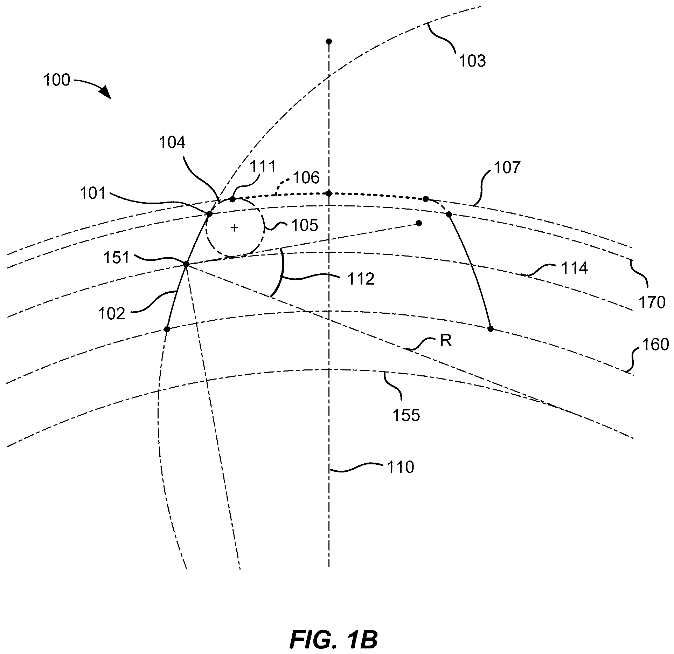

FIG. 1B illustrates a detailed view of the circular tooth geometry as shown in FIG. 1A. Key parameters for a circular arc gear geometry are shown in FIG. 1B. Circular tooth designs are defined as a composition of multiple circular arcs, including at least a main tooth curvature 102 that is an arc of the main tooth curvature circle 103, a tip relief tooth curvature 104 that is an arc of the tip relief tooth curvature circle 105, and a tip tooth curvature 106 that is an arc of the tip circle 107. One or more elements are mirrored around the midplane 110 of the circular arc tooth 100 to form the circular arc tooth 100.

Various circular arcs of the circular arc tooth 100 are formed by a series of circles. For example, the main tooth curvature 102 is based on a main tooth curvature circle 103 that extends along and beyond the sides of the circular arc tooth 100 to form the sides of the circular arc tooth 100. Furthermore, the tip relief tooth curvature 104 is based on a tip relief tooth curvature circle 105 that forms an arc between the main tooth curvature 102 and the tip tooth curvature 106. The tip tooth curvature 106 can be based on the tip circle 107.

A pressure angle 112 determines the generation of radial loads on a gear including a circular arc tooth 100 when a load is applied at the tangent of a pitch circle 114. In some embodiments, the main tooth curvature 102 and the tip relief tooth curvature 104 are joined at a first tangent point 101 and the tip relief tooth curvature 104 and the tip tooth curvature 106 are joined at a second tangent point 111. In some embodiments, the length of the tip relief tooth curvature 104 is zero, resulting in the main tooth curvature 102 being joined directly to the tip tooth curvature 106. In some embodiments, the tip relief tooth curvature 104 is not tangent with the tip tooth curvature 106. Base circle 155, pitch circle 114, pitch point 151, root circle 160, tip relief circle 170, and R, which is the radius of the main tooth curvature circle, discussed more fully below, are also illustrated in FIG. 1B.

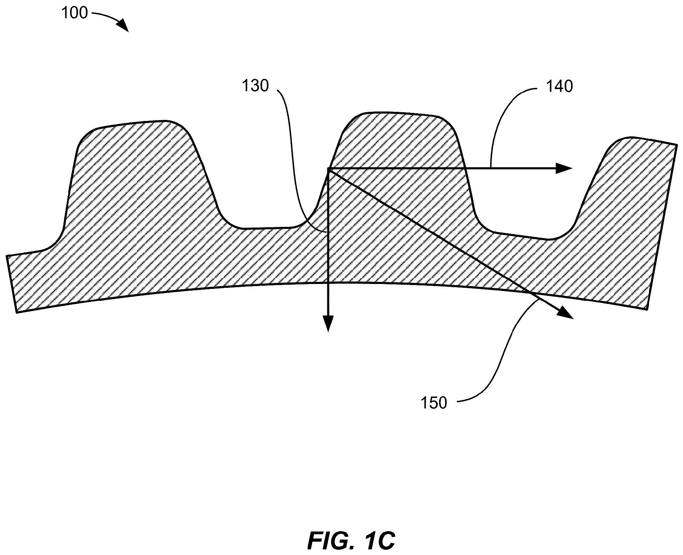

FIG. 1C illustrates radial loads on a circular arc tooth such as circular arc tooth 100. A radial load or radial force 130 is the product of a tangential load or tangential force 140. The resultant force 150 is composed of the tangential force 140 and the radial force 130. Higher radial loads push into a gear assembly, thereby putting more stress on the "delicate" parts like bearings of the gear assembly. The higher the radial loads, the larger bearings, and other assembly pieces are configured to handle the forces, which increases the size of the overall assembly. For a unit tangential load at a 25° pressure angle, the radial load is 47% of the tangential load. For the same unit tangential load acting on a 60° pressure angle, the radial load is 173% of the tangential load.

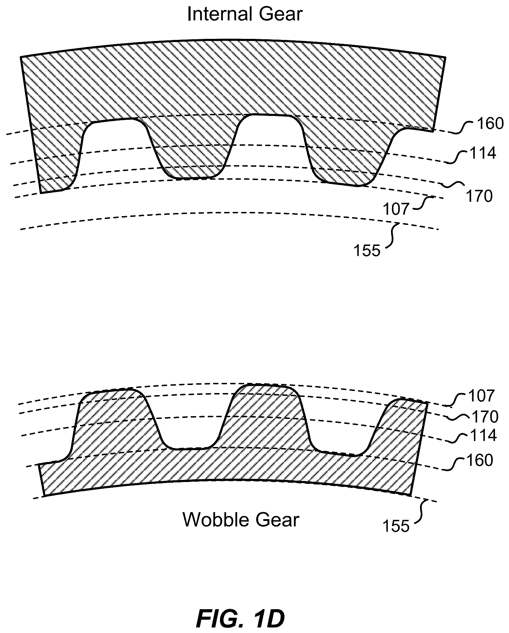

FIG. 1D illustrates additional parameters related to arc interaction in circular arc tooth geometry. Additional circles may intersect with tooth curvature circles to define the arcs that create the tooth shape. For example, the root circle, e.g., the root circle 160 as shown in FIG. 1B, determines where the tooth starts shape starts, the pitch circle, e.g., the pitch circle 114 as shown in FIG. 1B, determines how thick the teeth become, and the tip relief circle, e.g., the tip relief circle 170 as shown in FIG. 1B, determines where the tip relief curvature, e.g., tip relief tooth curvature 104, starts. The tip circle 107 and the base circle 155 are also illustrated in FIG. 1D.

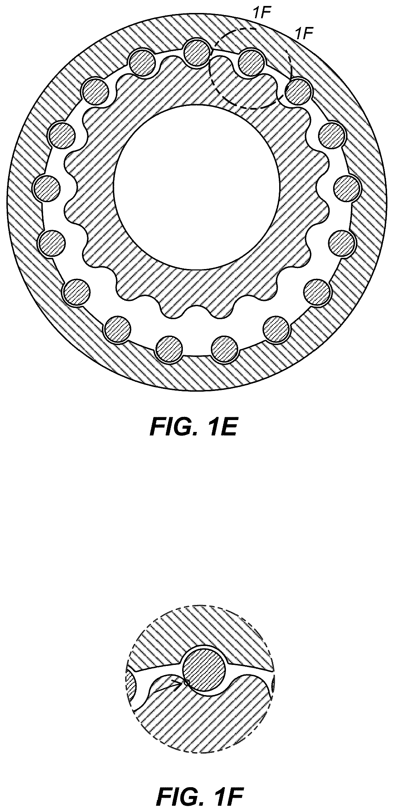

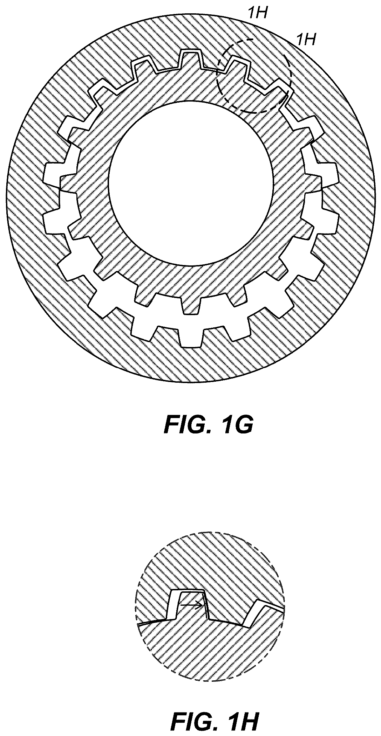

FIGS. 1E - 1H compare cycloidal geometry with circular arc tooth geometry as described with respect to FIGS. 1A-1D. FIG. 1E is a schematic diagram illustrating a cycloidal gear. FIG. 1F is a schematic diagram illustrating pin-on-pin contact in a cycloidal gear. FIG. 1G is a schematic diagram illustrating a circular arc gear. FIG. 1H is a schematic diagram illustrating pin-in-socket contact in a circular arc gear. As illustrated in FIGS. 1F and 1H, one key consideration for tooth geometries is pin-on-pin versus pin-in-socket contact configurations. Pin-on-Pin (e.g., cycloidal gears) contact as illustrated in FIG. 1F concentrates loads over a small contact surface leading to higher contact stress. Pin-in-Socket (e.g. Circular Arc) contact as illustrated in FIG. 1H shares loads over a larger contact surface leading to lower contact stresses.

To determine the circular arc gear tooth geometries for the modified circular arc tooth geometries of the present disclosure, the inventors began by surveying existing options circular for arc gear tooth geometries. Existing solutions included Wildhaber-Novikov and pseudo-cycloidal gear teeth as the predominant circular arc gear designs currently in use. Further investigation determined that Wildhaber-Novikov and pseudo-cycloidal tooth geometries would not be able to support a one-tooth difference gear pair design for the internal-external configuration used in a the Tesar Power^{™} actuator. Wildhaber-Novikov applications typically use two externally meshed gears with a relatively small circular arc radius, but this geometry requires a helical gear configuration to provide an acceptable contact ratio through axial overlap. Small arc radii do not allow one tooth differences in internal-external gear pairs because small radii prevent adjustment of pitch pressure angle and tooth thinning. Pseudo-cycloidal tooth forms are commonly used in clock works and are not appropriate for high-torque actuators due to their relatively thin teeth being unable to support the required loads.

Conventional ruggedized actuator circular arc gear teeth are based around a more than one tooth difference gear pair and the inventors appreciated that, if used without modification, these ruggedized teeth would not provide a sufficiently high reduction ratio. Embodiments of the present disclosure provide circular arc gear tooth geometry based on a modification of the ruggedized actuator tooth geometry. Three types of interference are concerns for profile shifted involute external-internal gearing: Trochoid, Involute, and Trimming. Because Trochoid and Involute interference are geometric terms related to involute curves, they are not directly related to circular arc profiles, but the methods to eliminate the interference are similar. Trimming interference is accepted for high-ratio gears since it can exist in the pair without harming function, but limits assembly to axial mating (they must be assembled by sliding the gears together along their gear axes). The first two types of interference describe tips of either gear hitting teeth in out of mesh positions. Profile shifting of involute teeth accomplished making the teeth "pointier" or "blockier" and thinner or thicker relative to the zero shift profiles.

Embodiments of the present disclosure eliminate interferences in profile-shifted involute gears and adapt them for use in circular arc gear teeth. Since the pressure angle of circular arc profiles can be modified at will, pressure angle can increase to make the circular arc teeth "pointier" to eliminate the bulk of the out of mesh interference. Further clearance may be provided after adjusting pressure angle, i.e., the teeth may be thinned and center distance adjusted to provide fine clearances.

A working gear pair was designed by increasing the pressure angle from 7° to 25°, thinning both internal and external teeth by 2.5%, and increasing the center distance by 0.026 inches. Embodiments of the present disclosure provide circular arc tooth geometry that can support interference-free operation of a one-tooth difference gear pair in an external-internal configuration. Further embodiments are capable of one-tooth contact operation with an acceptable margin of safety. Moreover, an extra margin of safety is present when accounting for the expected deflections of tuned flexibility gear teeth when operating under load leading to a high-contract ratio that shares the total stress between multiple teeth.

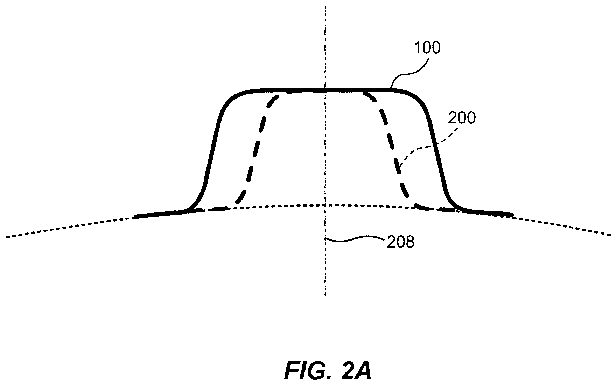

FIG. 2A illustrates a modified tooth geometry used to provide a modified circular arc tooth according to embodiments of the present disclosure. To achieve the highest possible torque density (e.g., largest reduction ratio + load capacity in a given volume), the inventors have developed a tooth form that allows for a 1-tooth difference without interfering during the mesh cycle, having a pin-on-socket contact to minimize stress on the teeth under high loads, and having the lowest possible radial loads to minimize stress on the bearings and other parts in the assembly. Embodiments of the present disclosure transform the circular arc tooth 100 of FIGS. 1A-1D to a modified circular arc tooth 200 as illustrated in FIG. 2A. The modified circular arc tooth 200 is thinner than the circular arc tooth 100 (e.g., an unmodified tooth shape) since, as described more fully below, the distance between the pitch points are reduced with respect to the original distance between pitch points. The midplane 208 is also illustrated in FIG. 2A.

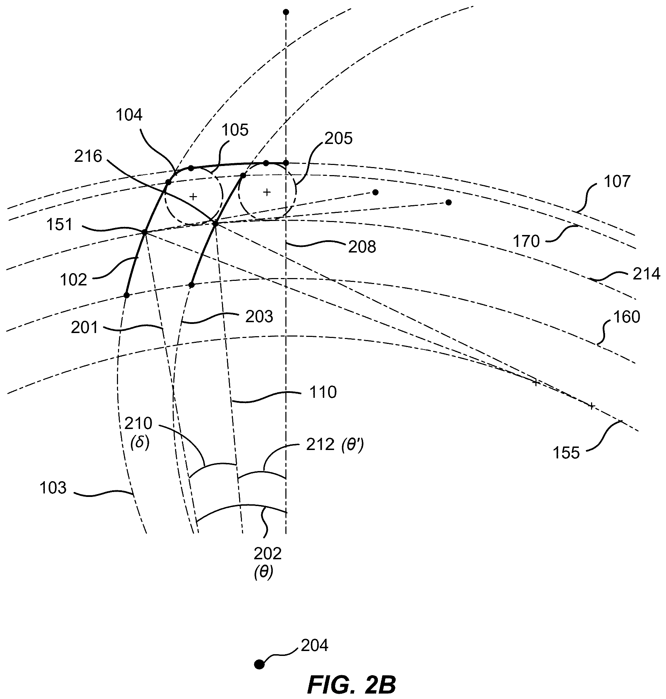

FIG. 2B illustrate a detailed view of the modifications shown in FIG. 2A according to embodiments of the present disclosure. For purposes of clarity, only the left half of the modified circular arc tooth 200 is illustrated. As will be evident to one of skill in the art, the right side (not shown) of the modified circular arc tooth 200 will be present in a mirrored manner to the right of the midplane 208 of the modified circular arc tooth.

The tooth thickness of circular arc tooth 100, i.e., an unmodified circular arc tooth, is related to the original tooth thickness angle 202 (i.e., the original tooth thickness angle *θ*) formed between a first line 201 extending between the center 204 and the pitch point 151, and a second line running through the center of the tooth, e.g., the midplane 208 of the tooth. Embodiments of the present invention provide a thinned tooth by decreasing the original tooth thickness angle 202, also referred to as the original tooth thickness angle, by a given tooth thinning angle 210 (δ) to produce a modified tooth thickness angle 212 (*θ*'). This has the effect of rotating the tooth geometry elements (e.g., including at least the main tooth curvature such as the main tooth curvature 102 described as shown with respect to FIGS. 1A-1D, the tip relief curvature such as the tip relief tooth curvature 104 described as shown with respect to FIGS. 1A-1D, the pitch point 151, etc.) about the center 204 of the gear by the tooth thinning angle 210 to form the modified tooth thickness angle 212. The modification according to embodiments described herein may be applied to one or both of an internal gear and/or an eccentric gear of a gear assembly, to be described in further detail below.

Embodiments of the present disclosure select the desired number of teeth for the internal and the eccentric gears to achieve a given ratio and torque capability, which is used to derive the pitch circle. The pressure angle is selected to achieve the desired radial load characteristics for the teeth. The radii of the main tooth curvatures (internal and eccentric gear) are selected to create a pin and socket contact and provide shape control. The tip relief curvature and tip relief circle radii (internal and eccentric gear) are selected to minimize interference between teeth pairs. The tip circles for internal and eccentric gears is selected to achieve a desired contact ratio between the gears.

Referring to FIG. 2B, the tooth pitch is equal to the circumference of the pitch circle 214 divided by the number of teeth. For each tooth, an original tooth thickness angle 202 is equal to the angle subtended by one half of one tooth, with each tooth separated by an equal gap between teeth. Thus, the original tooth thickness angle 202, also referred to as a nominal tooth thickness angle, is equal to 360°/N/4, where N is the number of teeth. As shown in FIG. 2B, the width of each original tooth is equal to twice the distance between the pitch point 151, also referred to as the original pitch point or the nominal pitch point, and the midplane 208 of the tooth.

In order to form a modified circular arc tooth, the pitch point is shifted from the pitch point 151 to the modified pitch point 216 by rotating the main tooth curvature circle 103 illustrated in FIGS. 1B and 2B by the tooth thinning angle 210 about the center 204 to form a modified main tooth curvature circle 203. In addition to rotation of the main tooth curvature circle 103, the tip relief tooth curvature circle 105 illustrated in FIGS. 1B and 2B is also rotated about the center 204 by the tooth thinning angle 210 to form modified tip relief tooth curvature circle 205. Thus, after thinning, the modified tip relief tooth curvature circle 205 intersects with the tip circle 107 at a location along the tip circle 107 closer to the midplane 208 of the tooth. The thickness of the modified circular arc tooth 200 is now defined by twice the distance between the modified pitch point 216 and the midplane 208 of the tooth.

Referring once again to FIG. 2B, the pitch of the set of circular arc teeth is equal to a circumference of a pitch circle divided by the number of teeth. The modified circular arc tooth 200 is defined by a main tooth curvature joined to a tip relief curvature, which is joined to a tip curvature. The tip curvature can be less than zero (e.g., for an internal gear), equal to zero (e.g., for a rack), or greater than zero (e.g., for an external gear). This set of combined arcs defines one half (e.g., the left half) of the modified circular arc tooth 200. The thickness of the modified circular arc tooth 200 is defined by a modified tooth thickness angle 212 equal to *θ'=θ*(1*-x*)*,* where θ is a nominal tooth thickness angle equal to 360°/N/4, N is the number of teeth, and x is a positive value, i.e., a real number greater than zero. As an example, x can be equal to 2.5% such that *θ*'= *θ*(1-0.025). In other embodiments, the tooth thinning angle 210 can be computed as δ = *θ***x*, for example, δ = 0.025*θ*. In yet other embodiments, As an example, x can be less than or equal to 2.5% or greater than 2.5%. One of ordinary skill in the art would recognize many variations, modifications, and alternatives.

In some embodiments, the length of the tip relief tooth curvature is zero, resulting in the main tooth curvature being joined directly to the tip tooth curvature.

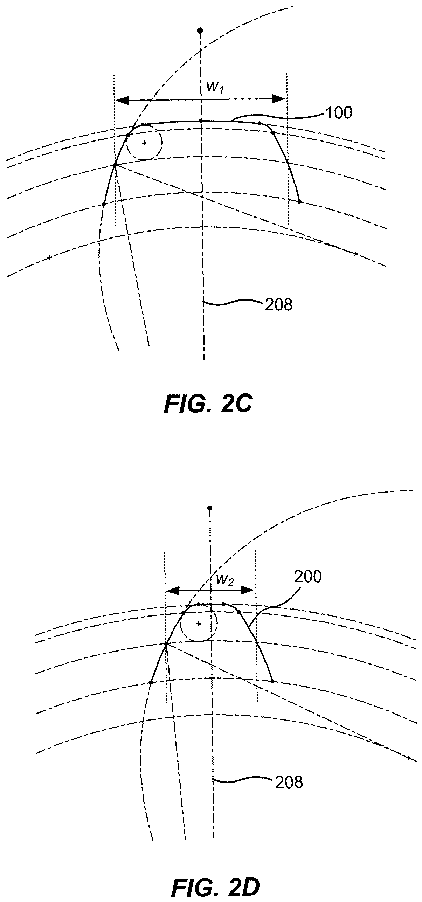

FIG. 2C illustrates measurements of the circular arc tooth 100. FIG. 2D illustrates measurements of the modified circular arc tooth 200. As illustrated, in these figures, which show the transition from the circular arc tooth 100 (i.e., the unmodified circular arc tooth geometry) to the modified circular arc tooth 200 (i.e., the modified circular arc tooth geometry), both images have the same mid-plane 208, but the modified circular arc tooth 200 is thinner in width (e.g., *w*₂ is less than *w*₁).

In various embodiments, the modified circular arc tooth 200 is thinned by a percentage (e.g., greater than or equal to or less than 2.5%) to achieve a "thinned tooth angle." The difference between the unmodified tooth thickness angle (i.e., original tooth thickness angle 202 (*θ*)) and the thinned tooth angle (i.e., modified tooth thickness angle 212 (*θ*')) is the "tooth thinning angle" 210 (*δ*). As discussed above, the main tooth curvature 102, the tip relief tooth curvature 104, and the pitch point 151 are then rotated about the gear origin (e.g., the center 204) by the tooth thinning angle 210 to form the modified circular arc tooth 200 according to embodiments of the present disclosure.

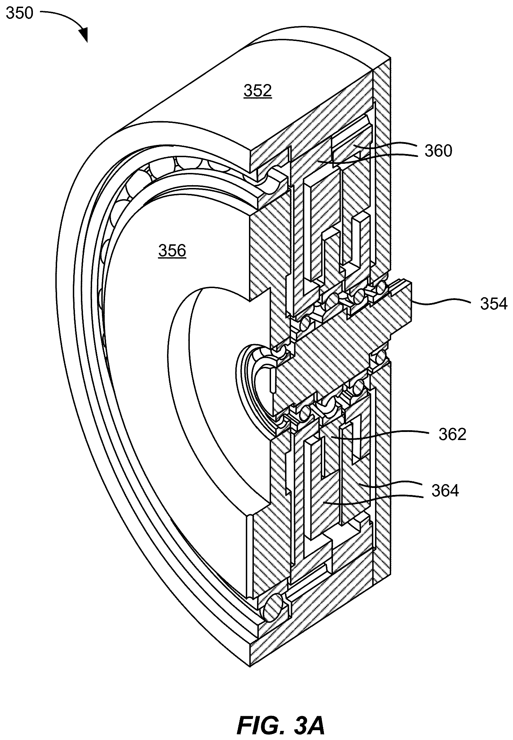

FIG. 3A illustrates a cross section of a gear assembly 350 according to embodiments of the present disclosure. Embodiments of the present disclosure provide a parallel eccentric gear assembly design featuring a one-tooth difference gear pair and gear tooth geometry. This design is capable of one-tooth contact operation with an acceptable margin of safety. Moreover, an extra margin of safety is present when accounting for the expected deflections of tuned flexibility gear teeth when operating under load leading to a high-contract ratio that shares the total stress between multiple teeth. Referring to FIG. 3A, fixed gear 352 surrounds input drive 354 and output drive 356. Eccentric 360 is connected to output 362 by crosslinks 364.

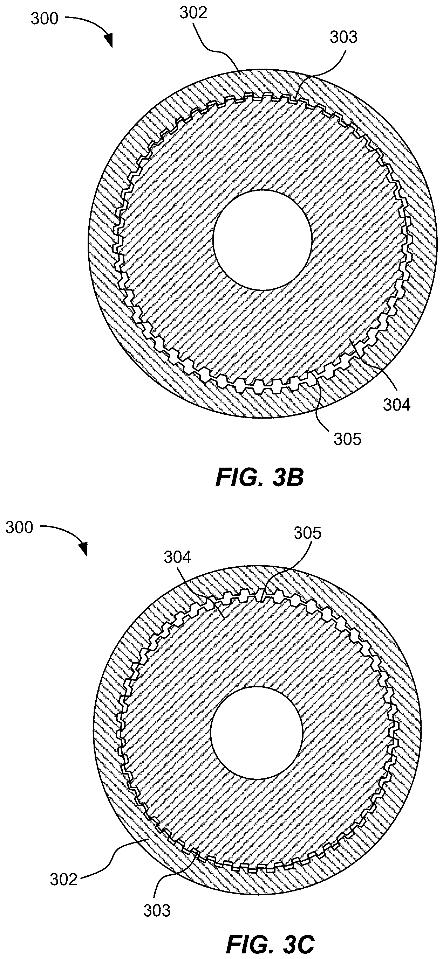

FIG. 3B illustrates a gear pair of a gear assembly in a first position according to embodiments of the present disclosure. FIG. 3C illustrates a gear pair of a gear assembly in a second position according to embodiments of the present disclosure. The gear assembly 300 is composed of an internal gear 302 (an outer ring with teeth 303 facing in) and an eccentric gear 304, also referred to as a wobble gear (an inner ring with teeth 305 facing out). The eccentric gear 304 moves around inside the internal gear 302 in an eccentric fashion and thus, can be referred to as a wobble gear. The gear ratio is determined by the difference in number of teeth between the internal gear 302 and eccentric gear 304. The highest-possible gear ratio for gear assembly is achieved via a 1-tooth difference between the internal gear 302 and eccentric gear 304. Thus, for the gear pair of the gear assembly illustrated in FIG. 3B, internal gear 302 has 50 teeth 303 and eccentric gear 304 has 49 teeth 305, resulting in a gear ratio of 50:1 being achieved. As described herein, other gear ratios for the gear assembly can be utilized and embodiments of the present invention are not limited to the 50-49 tooth gear pair illustrated in some of the embodiments herein.

In some embodiments, the teeth of the internal gear are thinned and the teeth of the eccentric gear remain at the nominal tooth thickness. In other embodiments, the teeth of both the internal gear and the eccentric gear are thinned. In yet other embodiments, the teeth of the eccentric gear are thinned while the teeth of the internal gear remain at the nominal tooth thickness. In another particular embodiment, the teeth of one of the gears are thinned and the teeth of the other gear are thickened by an amount equal to or different from the amount by which the teeth of the one of the gears is thinned. One of ordinary skill in the art would recognize many variations, modifications, and alternatives.

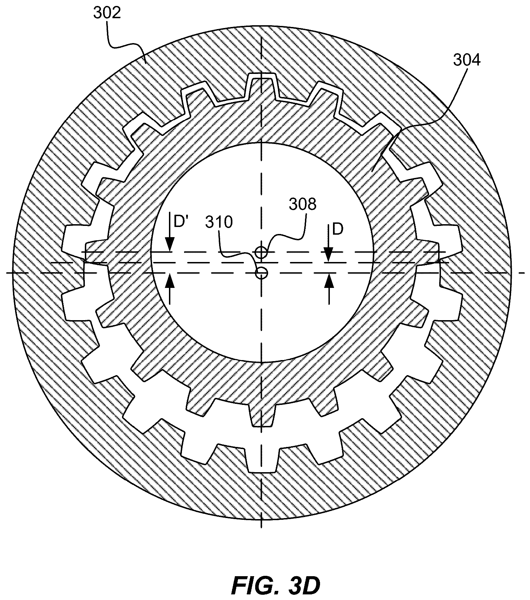

FIG. 3D illustrates a gear pair of a gear assembly according to embodiments of the present disclosure. For this eccentric gear, the eccentricity is measured by the difference in position (i.e., the offset) between the center 308 of the eccentric gear 304 and the center 310 of the internal gear 302. Thinning of the gear teeth as discussed in relation to FIGS. 2B and 2D will result in an increased distance between the teeth of the eccentric gear and the teeth of the internal gear. In order to put the gears back in mesh, the eccentric gear 304 may be offset such that the center 308 of the eccentric gear 304 is more eccentrically offset than prior to thinning of the gear teeth. Thus, as illustrated in FIG. 3D, eccentric gear 304, which was originally eccentrically offset by the distance D can now be offset by the distance D'. This increase in the offset distance increases the eccentricity of the gear assembly and ensures that the gears are in mesh.

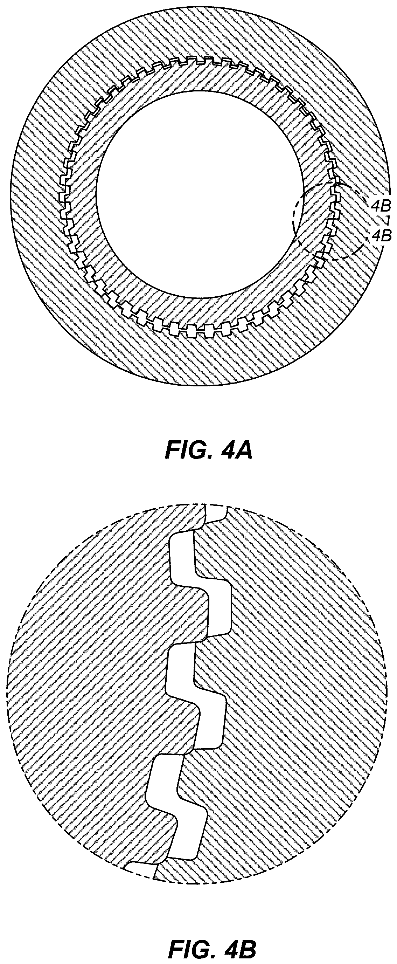

FIG. 4A illustrates a 50-49 tooth gear pair with 7° circular arc pressure angle according to an embodiment of the present disclosure. FIG. 4B illustrates a zoomed in portion of the 50-49 tooth gear pair illustrated in FIG. 4A. As illustrated in FIG. 4B, out of mesh interferences occur in this gear pair design.

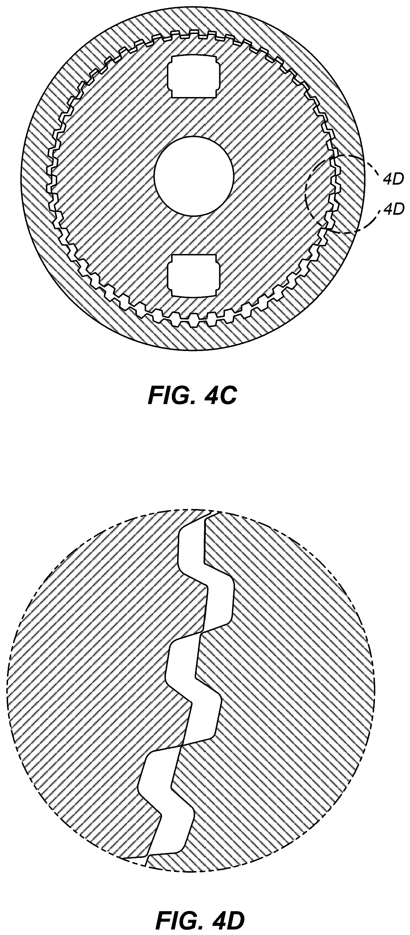

FIG. 4C illustrates a 50-49 Tooth Gear Pair with 25° circular arc pressure angle and 2.5% tooth thinning according to embodiments of the present disclosure. FIG. 4D illustrates a zoomed in portion of the 50-49 tooth gear pair illustrated in FIG. 4C. In contrast with the mesh interference shown in FIG. 4B, FIG. 4D illustrates how the implementation of embodiments of the present disclosure remove the interferences as shown in FIG. 4B.

Although some embodiments are discussed in relation to a 50-49 tooth gear pair, this is not required by the present invention and other embodiments utilize a different number of teeth for one or both of the internal gear and/or the eccentric gear. Merely by way of example, a gear set with tooth pairs (and their ratios) of 100-99 (100:1), 500-499 (500:1), or 1000-999 (1000:1) can be utilized. Thus, gear sets with more than one-tooth differences as well as gear sets with less than 50 teeth on the internal gear or more than 50 teeth on the internal gear can be utilized and are included within the scope of the invention. Merely by way of example, gear sets with tooth pairs (and their ratios) of 10-9 (10:1), 20-19 (20:1), 30-29 (30:1), 40-39 (40:1), 40-49 (50:1), 60-59 (60:1), 70-69 (70:1), 80-79 (80:1), and 90-89 (90:1) as well as gear sets with value in between these values can be implemented using the methods and techniques discussed herein.

Embodiments of the present disclosure eliminate interferences in profile-shifted involute gears and adapt them for use in circular arc gear teeth. The pressure angle of circular arc profiles may be modified such that the pressure angle increases to make the circular arc teeth "pointier" to eliminate the bulk of the out of mesh interference. If further clearance is required after adjusting the pressure angle, the teeth may be thinned and the center distance (i.e., the eccentric offset) may be adjusted to provide fine clearances. The working gear pair was designed by increasing the pressure angle from 7° to 25°, thinning both internal and external teeth by 2.5%, and increasing the center distance by 0.026 inches. Thus, embodiments of the present invention provide a tooth design in which the thinning of the gear teeth enables interference free operation in a one-tooth difference gear assembly.

An exemplary embodiment of the present disclosure includes a 50-49 tooth external-internal gears designed for a lowering actuator a circular arc pressure angle of 25°. The circular arc tooth geometry is modified according to the present disclosure to support interference-free operation of a one-tooth difference gear pair in an external-internal configuration.

Various examples of the present disclosure are provided below. As used below, any reference to a series of examples is to be understood as a reference to each of those examples disjunctively (e.g., "Examples 1-4" is to be understood as "Examples 1, 2, 3, or 4").

Example 1 is a gear assembly comprising: an internal gear having N teeth; and an eccentric gear having N-1 teeth; wherein at least one of the internal gear or the eccentric gear comprises: a set of circular arc teeth disposed on a peripheral surface of the at least one of the internal gear or the eccentric gear, wherein a pitch of the set of circular arc teeth defines a first tooth thickness angle *θ*; wherein each tooth is defined by: a main tooth curvature; a tip relief curvature; a tip curvature; and a second tooth thickness angle *θ*' = *θ*(1 *- x*)*,* wherein *x* is a positive value.

Example 2 is the gear assembly of example 1, wherein N is greater than or equal to 50.

Example 3 is the gear assembly of example(s) 1-2, wherein N is between 10 and 100.

Example 4 is the gear assembly of example(s) 1-3, wherein N is between 25 and 75.

Example 5 is the gear assembly of example(s) 1-4, wherein N is between 40 and 60.

Example 6 is the gear assembly of example(s) 1-5, wherein the eccentric gear is offset from the center of the internal gear by a nominal amount for circular arc teeth defined by a first tooth thickness angle θ and is offset from the center of the internal gear by an offset amount greater than the nominal amount for modified circular arc teeth defined by the second tooth thickness angle θ'.

Example 7 is the gear assembly of example(s) 1-6, wherein the offset amount prevents out of mesh interference.

Example 8 is the gear assembly of example(s) 1-7, wherein both the internal gear and the eccentric gear have the second tooth thickness angle *θ*' = *θ*(1 - *x*)*.*

Example 9 is the gear assembly of example(s) 1-8, wherein x is less than or equal to 2.5%.

Example 10 is the gear assembly of example(s) 1-9, wherein the main tooth curvature and the tip relief curvature are joined at a first tangent point.

Example 11 is the gear assembly of example(s) 1-10, wherein the tip curvature is greater than or equal to zero.

Example 12 is the gear assembly of example(s) 1-11, wherein the tip curvature is equal to zero.

Example 13 is a gear comprising: a set of circular arc teeth disposed on a peripheral surface of the gear, wherein a pitch of the set of circular arc teeth defines a first tooth thickness angle *θ*; wherein each tooth is defined by: a main tooth curvature; a tip relief curvature; a tip curvature; and a second tooth thickness angle *θ*' = *θ*(1 - x), wherein *x* is a positive value.

Example 14 is the gear of example 13, wherein x is less than or equal to 2.5%.

Example 15 is the gear of example(s) 13-14, wherein the main tooth curvature and the tip relief curvature are joined at a first tangent point.

Example 16 is the gear of example(s) 13-15, wherein the tip relief curvature and the tip curvature are joined at a second tangent point.

Example 17 is the gear of example(s) 13-16, wherein the tip curvature is zero.

Example 18 is the gear of example(s) 13-17, wherein the tip curvature is less than zero.

Example 19 is the gear of example(s) 13-18, wherein the tip curvature is greater than zero.

Example 20 is the gear of example(s) 13-19, wherein the pitch of the set of circular arc teeth is equal to a circumference of a pitch circle divided by a number of teeth.

Example 21 is the gear of example(s) 13-20 wherein an arc of the pitch circle includes end points corresponding to tooth thickness angle radii end points.

Example 22 is the gear of example(s) 13-22, wherein the gear has between 10 and 100 circular arc teeth.

Example 23 is the gear of example(s) 13-22, wherein the gear has between 25 and 75 circular arc teeth.

Example 24 is the gear of example(s) 13-23, wherein the gear has between 40 and 60 circular arc teeth.

Example 25 is the gear of example(s) 13-24, wherein the first tooth thickness angle is defined by a midplane of each tooth and a pitch point of the tip relief curvature with respect to a center of the gear.

Example 26 is a method of modifying teeth disposed along a circumference of a gear, comprising: defining a first tooth thickness angle between a midplane of a tooth and a pitch point of the tooth with respect to a center of the gear; and modifying the first tooth thickness angle to form a second tooth thickness angle, wherein modifying the first tooth thickness angle forms a modified tooth profile.

Example 27 is the method of example 26, wherein a difference between the first tooth thickness angle and the second tooth thickness angle is a tooth thinning angle less than or equal to 0.25% of the first tooth thickness angle.

Example 28 is the method of example(s) 26-27, wherein modifying the first tooth thickness angle to form the second tooth thickness angle comprises rotating the pitch point about the center by a tooth thinning angle.

Example 29 is the method of example(s) 26-28, wherein the tooth is defined by at least a main tooth curvature, a tip relief curvature, and a tip curvature.

Example 30 is the method of example(s) 26-29, wherein the tip curvature is greater than or equal to zero.

Example 31 is the method of example(s) 26-30, wherein the tip curvature is equal to zero.

Example 32 is the method of example(s) 26-29, wherein the main tooth curvature and the tip relief curvature are joined at a first tangent point.

Example 33 is the method of example(s) 26-29, wherein the tip relief curvature and the tip curvature are joined at a second tangent point.

The above description of the present invention is illustrative, and is not intended to be limiting. It will thus be appreciated that various additions, substitutions and modifications may be made to the above-described embodiments without departing from the scope of the present invention. Accordingly, the scope of the present invention should be construed in reference to the appended claims. It will also be appreciated that the various features set forth in the claims may be presented in various combinations and sub-combinations in future claims without departing from the scope of the invention. In particular, the present disclosure expressly contemplates any such combination or sub-combination that is not known to the prior art, as if such combinations or sub-combinations were expressly written out.

## Claims

1. A gear assembly comprising:
an internal gear having N teeth; and
an eccentric gear having N-1 teeth; wherein at least one of the internal gear or the eccentric gear comprises:
a set of circular arc teeth disposed on a peripheral surface of the at least one of the internal gear or the eccentric gear, wherein a pitch of the set of circular arc teeth defines a first tooth thickness angle *θ*; wherein each tooth is defined by:
a main tooth curvature;
a tip relief curvature;
a tip curvature; and
a second tooth thickness angle *θ*' = *θ*(1 - *x*), wherein x is a positive value.

2. The gear assembly of claim 1, wherein N is greater than or equal to 50.

3. The gear assembly of claim 1, wherein N is between 10 and 100, optionally between 25 and 75, or optionally between 40 and 60.

4. The gear assembly of claim 1, wherein the eccentric gear is offset from the center of the internal gear by a nominal amount for circular arc teeth defined by a first tooth thickness angle *θ* and is offset from the center of the internal gear by an offset amount greater than the nominal amount for modified circular arc teeth defined by the second tooth thickness angle *θ*'.

5. The gear assembly of claim 4, wherein the offset amount prevents out of mesh interference.

6. The gear assembly of claim 1, wherein both the internal gear and the eccentric gear have the second tooth thickness angle *θ*' = *θ*(1 *- x*)*.*

7. The gear assembly of claim 1, wherein x is less than or equal to 2.5%.

8. The gear assembly of claim 1, wherein the main tooth curvature and the tip relief curvature are joined at a first tangent point.

9. The gear assembly of claim 1, wherein the tip curvature is equal to zero.

10. The gear assembly of claim 1, wherein the tip relief curvature and the tip curvature are joined at a second tangent point.

11. The gear assembly of claim 1, wherein the tip curvature is less than zero.

12. The gear assembly of claim 1, wherein the tip curvature is greater than zero.

13. The gear assembly of claim 1, wherein the pitch of the set of circular arc teeth is equal to a circumference of a pitch circle divided by a number of teeth.

14. The gear assembly of claim 13 wherein an arc of the pitch circle includes end points corresponding to tooth thickness angle radii end points.

15. The gear assembly of claim 1, wherein the first tooth thickness angle is defined by a midplane of each tooth and a pitch point of the tip relief curvature with respect to a center of the gear.
